# FASCICULE DE BREVET EUROPEEN

(11) **EP 1 721 444 B1**
(45) Date de publication et mention de la délivrance du brevet: **12.12.2007**
(21) Numéro de dépôt: 05717505.1
(22) Date de dépôt: 26.01.2005
(51) Int. Cl.: H04M 3/42, H04Q 7/38

(54) **PROCEDE DE TRANSMISSION À UN CENTRE D' APPELS, DE DONNEES DE LOCALISATION D' UN TERMINAL DE COMMUNICATION APPELANT**
VERFAHREN ZUM SENDEN VON LOKALISIERUNGSDATEN DES ANRUFENDEN KOMMUNIKATIONSENDGERÄTS ZU EINER ANRUFZENTRALE
METHOD FOR TRANSMITTING CALLING COMMUNICATION TERMINAL LOCATION DATA TO A CALL CENTRE

(30) Priorité: 11.02.2004 FR 0450245
(43) Date de publication de la demande: 15.11.2006
(73) Titulaire: Alcatel Lucent, 75008 Paris (FR)
(72) Inventeur: GASS, Raymond, 67150 Bolsenheim (FR); LE CREFF, Michel, F-95450 Vigny (FR)
(74) Mandataire: Sciaux, Edmond
(86) Numéro de dépôt international: PCT/FR2005/000184
(87) Numéro de publication internationale: WO 2005/088948

(56) Documents cités:
- WO-A-02/33897
- DE-U- 29 911 129
- US-A1- 2002 193 123
- US-B1- 6 243 442

## Description

L'invention concerne la transmission, à un centre d'appels, de données de localisation de terminaux de communication ayant appelé ledit centre d'appels, notamment lors de l'établissement d'un appel d'urgence.

On entend ici par « terminal de communication » tout terminal, fixe ou mobile, capable d'échanger des données ou signaux avec un réseau de communication, notamment un terminal téléphonique.

Comme le sait l'homme de l'art, il existe dans certains pays des lois qui imposent de communiquer à un centre d'appels, appelé par un terminal de communication au moyen d'un numéro dédié, des données représentatives de sa localisation géographique. C'est notamment le cas des numéros d'urgence 112, en Europe, et 911, aux Etats Unis d'Amérique, qui permettent de joindre des services de sécurité ou des services gouvernementaux, afin de leur signaler un événement revêtant un caractère prioritaire.

Un certain nombre de solutions techniques permettent aujourd'hui de déterminer, au moins approximativement, la position géographique d'un terminal de communication appelant, notamment dans les réseaux de téléphonie de type cellulaire (ou PLMN pour « Public Land Mobile Network »), analogique (ou RTC ou PSTN pour « Public Switched Telephony Network ») ou numérique (ou RNIS ou ISDN pour « Integrated Services Digital Network»).

Par ailleurs, dans les réseaux précités, l'opérateur est généralement en mesure de transmettre au centre d'appels les données de localisation d'un terminal appelant qui est connecté à son réseau. Mais un centre d'appels ne peut associer ces données de localisation à l'appel téléphonique d'un terminal qu'à condition qu'il soit lui-même connecté directement audit réseau. En d'autres termes, il est très difficile, voire impossible, à un centre d'appels d'associer des données de localisation à un appel téléphonique dès lors que l'appel téléphonique et les données de localisation doivent emprunter successivement des réseaux de type différents (ou hétérogènes), pour l'atteindre.

En pratique c'est souvent le cas, parce que les centres d'appels sont reliés au réseau public de téléphonie fixe mais les appels peuvent provenir de réseaux très divers : Par exemple, si un centre d'appels d'urgence est connecté au réseau public commuté et si une demande d'établissement d'appel provient d'un poste connecté à un réseau d'entreprise, un appel est établi via deux réseaux de types différents : un réseau d'entreprise et le réseau public commuté, qui n'utilisent pas les mêmes protocoles de transmission de données. Des données de localisation pourraient être envoyées par un auto-commutateur de ce réseau d'entreprise, mais ces données seraient transmises selon un des nombreux protocoles utilisés dans les réseaux d'entreprise, pour la transmission de données. Pour que le centre d'appels puissent recevoir et exploiter ces données il faudrait qu'il comporte une passerelle adaptée à ce protocole. En pratique, il n'est pas possible de prévoir une passerelle adaptée pour tous les protocoles de transmission de données qui existent dans les réseaux d'entreprise.

Le document WO 02/33897 A2 décrit un réseau d'entreprise capable de transmettre à un centre d'appels d'urgence des données représentatives de la localisation d'un terminal de communication qui demande l'établissement d'un appel d'urgence. Le terminal de communication est une machine informatique (par exemple un ordinateur personnel, ou un téléphone de type Voix sur protocole Internet). Cette machine permet d'établir une communication de type données ou de type voix, avec un centre d'appels, via un réseau de transmission de données utilisant par exemple le protocole Internet. Selon un mode de réalisation, lorsqu'un usager veut établir une liaison téléphonique entre son terminal et le centre d'appels d'urgence, son terminal reconnaît qu'il s'agit d'un appel d'urgence et il active un dispositif de localisation qui fournit des données traduisant la localisation du terminal, à un serveur de localisation. Ce dernier met ces données dans un message de localisation, et il envoie ce message au centre d'appels via le réseau de transmission de données. Parallèlement un appel téléphonique est établi entre le terminal et le centre d'appels. Le centre d'appels doit associer le message de localisation et le message demandant l'établissement d'un appel d'urgence. Pour permettre cette association, le terminal utilise ses moyens de traitement de données pour fournir un identifiant d'appel univoque, qui est inséré dans le message de signalisation demandant l'établissement d'un appel, et dans le message de localisation comportant des données représentatives de la localisation du terminal appelant.

Ce procédé connu a pour avantage de permettre la transmission de données de localisation en utilisant un protocole réseau très répandu (le protocole Internet) et un réseau très répandu (le réseau Internet), mais il n'est pas utilisable dans les réseaux d'entreprise classiques comportant des postes téléphoniques numériques ou analogiques qui ont peu ou pas de moyens de traitement de données. Si un tel poste téléphonique demande l'établissement d'un appel téléphonique d'urgence, le centre d'appels d'urgence ne peut pas connaître sa localisation précise, car il ne reçoit que le numéro d'abonné de l'autocommutateur (d'entreprise) auquel est rattaché ce terminal. Le terminal est incapable de fournir des données de localisation plus précises, dans un message de demande d'établissement d'appel, ou de fournir un identifiant d'appel univoque permettant d'associer un message de localisation et un message demandant l'établissement d'un appel d'urgence.

L'invention a donc pour premier but de proposer un procédé permettant la transmission à un centre d'appels, des données représentatives de la localisation d'un terminal de communication, sans nécessiter des moyens de traitement de données dans ces terminaux.

L'objet de l'invention est un procédé de transmission à un centre d'appels de données représentatives de la localisation d'un terminal de communication, consistant, en cas de demande d'établissement d'un appel entre ce terminal et ce centre d'appels, à :
- constituer puis transmettre au centre d'appels :
   -- un message de signalisation, demandant l'établissement d'un appel entre ce terminal et un centre d'appels, et comprenant un identifiant d'appel univoque,
   -- et un message de localisation comprenant des données représentatives de la localisation du terminal appelant et le même identifiant d'appel,
- et associer, dans le centre d'appel, un message de signalisation et un message de localisation, reçus par le centre d'appels et comprenant un même identifiant d'appel ;
caractérisé en ce que, pour constituer le message de signalisation comprenant un identifiant d'appel univoque, il consiste à générer un identifiant d'appel univoque dans un noeud de réseau recevant le message de signalisation émis par ce terminal, et demandant l'établissement d'un appel, puis intégrer cet identifiant univoque dans un message de signalisation adressé au centre d'appels et demandant l'établissement d'un appel ;
et pour constituer le message de localisation comprenant le même identifiant d'appel, il consiste à générer un message de localisation, et intégrer ce même identifiant d'appel à ce message de localisation.

Ce procédé permet d'utiliser des terminaux sans intelligence, notamment des terminaux téléphoniques classiques, parce que les identifiants d'appel sont créés dans un noeud de réseau indépendant de ces terminaux, mis à part le fait que les messages de signalisation demandant l'établissement d'un appel doivent atteindre ce noeud pour qu'il puisse détecter un message demandant l'établissement d'un appel.

Un second but de l'invention est de permettre la transmission, à un centre d'appels, de données représentatives de la localisation de terminaux de communication, via une succession de réseaux de communications hétérogènes.

Un mode de mise en oeuvre préférentiel du procédé selon l'invention est caractérisé en ce que ledit message de signalisation est un message textuel.

Le procédé ainsi caractérisé permet la transmission de données représentatives de la localisation via une succession de réseaux de communications hétérogènes, parce que tous les réseaux de télécommunication actuels, même les réseaux analogiques, comportent des moyens pour transmettre des messages textuels.

Un message textuel peut être transmis par tout service de messagerie classique : soit sous la forme d'un courrier électronique (ou « e-mail »), soit sous la forme d'un message court de type SMS (pour « Short Message Service »). Dans un réseau numérique à intégration de services, à multiplexage temporel synchrone, un mode de mise en oeuvre consiste à utiliser le canal dit de signalisation d'usager à usager pour transmettre un message textuel.

On peut par exemple déterminer les données de localisation du terminal appelant au moyen d'un serveur de localisation qui appartient au réseau auquel est connecté le terminal appelant, puis générer le message textuel et le transmettre au moyen d'un serveur de messages textuel appartenant à ce réseau.

Le message textuel peut par exemple comporter un champ dédié à des données représentatives de la nature de l'identifiant d'appel, suivi d'un champ dédié à l'identifiant d'appel, et au moins un champ dédié à des données représentatives de la localisation, et de préférence trois champs (un premier champ étant dédié à la mesure de latitude, un deuxième champ étant dédié à la mesure de longitude, et un troisième champ étant dédié à la mesure d'altitude).

De préférence, la nature de l'identifiant d'appel indique que le numéro est un « numéro de sélection directe à l'arrivée » (ou SDA, ou encore DDI pour « Direct Dialling In »), ou un pseudo numéro de sélection directe à l'arrivée (ou « pseudo-DDI »), ou un numéro générique, ou un numéro générique et un pseudo-DDI, ou encore un numéro générique et un identifiant de zone. Par ailleurs, le message textuel peut comporter au moins trois champs dédiés respectivement aux résolutions des mesures de latitude, de longitude et d'altitude.

En outre, le message textuel peut comporter un champ dédié à des données représentatives du type de la mesure d'altitude (comme par exemple des mètres (ou pieds) au dessus du niveau de la mer, ou un numéro d'étage).

De plus, l'identifiant d'appel est préférentiellement placé dans l'un des champs libres du message de signalisation.

Enfin, l'identifiant d'appel est par exemple un nombre choisi parmi un ensemble choisi de nombres, éventuellement propre au réseau auquel est connecté le terminal appelant.

L'invention propose également un dispositif d'aide à la localisation d'un terminal de communication par un centre d'appels, caractérisé en ce qu'il comprend des moyens pour :
- recevoir un message de signalisation émis par ce terminal et demandant l'établissement d'un appel entre ce terminal et un centre d'appels, et pour déterminer alors un identifiant d'appel univoque,
- puis ordonner la transmission de cet identifiant d'appel audit centre d'appels dans un message de signalisation demandant l'établissement d'un appel,
- et générer un message de type textuel comportant des données représentatives de la localisation dudit terminal appelant et le même identifiant d'appel,
- puis ordonner la transmission, audit centre d'appels dudit message textuel, de sorte que ledit centre d'appels puisse associer les données de localisation qu'il contient audit message de signalisation demandant l'établissement d'un appel.

D'autres caractéristiques et avantages de l'invention apparaîtront à l'examen de la description détaillée ci-après, et des dessins annexés, sur lesquels :
- La figure 1 illustre de façon schématique un exemple d'installation de communication, équipée d'un exemple de réalisation du dispositif d'aide à la localisation, permettant la mise en oeuvre du procédé selon l'invention.
- La figure 2 illustre de façon schématique un exemple de message textuel selon l'invention.

Les dessins annexés pourront non seulement servir à compléter l'invention, mais aussi contribuer à sa définition, le cas échéant.

L'invention a pour objet de permettre la transmission à un centre d'appels, via des réseaux de communications hétérogènes, de données de localisation de terminaux de communication ayant appelé le centre d'appels au moyen d'un numéro dédié, éventuellement d'urgence.

Dans la description qui suit on entend par « réseaux de communications hétérogènes » des réseaux de types différents, comme par exemple des réseaux privés, des réseaux locaux sans fil, tels que des réseaux WLAN (pour « Wireless Local Area Network »), Bluetooth ou UWB (pour « Ultra Wide Band »), des réseaux cellulaires publics ou privés (ou PLMN pour « Public Land Mobile Network »), tels que les réseaux GSM, GSM/GPRS et EDGE, des réseaux de téléphonie analogiques (ou RTC ou PSTN pour « Public Switched Telephony Network »), des réseaux numériques (ou RNIS ou ISDN pour « Integrated Services Digital Network »), et des réseaux de données publics ou privés (tels que l'Internet).

Par ailleurs, dans la description qui suit on entend par « terminal de communication » tout terminal, fixe ou mobile, capable d'échanger des données ou signaux avec un réseau de communication. Il pourra donc s'agir de téléphones fixes ou mobiles (ou cellulaires), d'assistants personnels numériques (ou PDAs) ou d'ordinateurs fixes ou portables équipés d'une interface de communication, ou encore de serveurs. Ces terminaux pourront être également équipés d'une carte réseau d'accès (ou « Network interface controller ») ou d'un adaptateur sans fil (ou « wireless adapter ») fonctionnant selon la norme Ethernet 802.11.

Enfin, dans la description qui suit on entend par « centre d'appels » tout terminal de communication pouvant être appelé à l'aide d'un numéro d'appel dédié de manière à permettre l'établissement d'une conversation téléphonique, et capable de recevoir et d'afficher des messages de type textuel, comme par exemple des courriers électroniques (ou « e-mail ») ou des messages courts de type SMS (pour « Short Message Service »). Il pourra donc s'agir de téléphones fixes ou cellulaires, munis d'un écran, ou d'ordinateurs fixes ou mobiles communicants ou d'une combinaison de ces différents types de terminaux.

L'invention vise plus particulièrement, bien que de façon non exclusive, les centres d'appels d'urgence permettant de joindre des services de sécurité ou des services gouvernementaux, afin de leur signaler un événement revêtant un caractère prioritaire, et notamment les centres d'appels dont le numéro d'appel dédié est le 112, en Europe, ou le 911, aux Etats Unis d'Amérique.

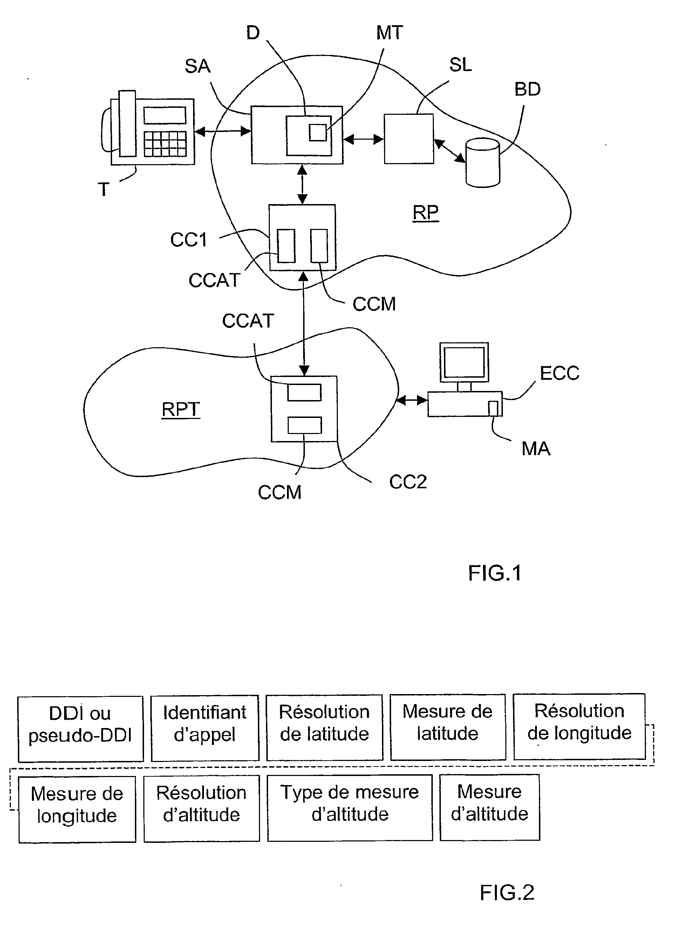

On a représenté sur la **figure 1**, de façon très schématique, une installation de communications comportant, à titre d'exemple illustratif, un réseau privé RP, appartenant par exemple à une ou plusieurs entreprises, ou à une université, ou encore à un gestionnaire de bâtiment(s), tel qu'un immeuble de bureaux, raccordé à un réseau public de téléphonie RPT.

Bien entendu, l'invention n'est pas limitée à cet exemple d'installation, et notamment à la combinaison et au nombre de réseaux choisis. On pourrait ainsi faire coexister un ou plusieurs réseaux de téléphonie, cellulaire(s) ou non, avec un ou plusieurs réseaux de données et/ou un ou plusieurs réseaux locaux, filaires ou sans fil.

Le réseau privé RP est par exemple un réseau local filaire (ou LAN pour « Local Area Network »), comprenant, d'une première part, un serveur d'appels SA auquel sont raccordés des terminaux de communication T, comme par exemple des téléphones fixes et des ordinateurs, d'une deuxième part, un serveur de localisation SL, par exemple de type LIS (pour « Location Information Server »), couplé à une base de données BD comportant, notamment, des données de localisation concernant les terminaux T raccordés au réseau privé RP, et d'une troisième part, au moins un centre (ou une passerelle) de commutation CC1 couplé, ici, au réseau public de téléphonie RPT.

Par exemple, le centre de commutation CC1 est un autocommutateur d'entreprise de type PABX (pour « Private Automatic Branch eXchange »).

On considère dans ce qui suit, à titre d'exemple, que le centre de commutation CC1 regroupe les fonctions de centre de commutation d'appels téléphoniques CCAT et de centre de commutation de messages CCM (qu'il s'agisse de messages de type SMS ou de type courrier électronique). Mais, bien entendu, ces fonctions pourraient être assurées par des centres différents.

Le serveur de localisation SL est agencé de manière à déterminer la position géographique des terminaux T qui sont raccordés à son réseau RP. A cet effet, tout moyen peut être envisagé. Il peut par exemple interroger une table, mémorisée dans la base de données BD, et établissant une correspondance entre des identifiants de terminaux T et des pièces (ou salles) de bâtiments. Dans ce cas, à réception d'un identifiant de terminal T le serveur de localisation SL doit déterminer la position géographique qui correspond à la pièce dans laquelle le terminal T est raccordé au réseau RP. En variante, la table peut directement établir une correspondance entre des identifiants de terminaux T et des positions géographiques. Dans ce cas, à réception d'un identifiant de terminal T le serveur de localisation SL détermine directement dans la table la position géographique du terminal T.

Il est important de noter que l'invention ne porte pas sur le mode de localisation de terminal utilisé, mais sur le mode de transmission de données de localisation à un centre d'appels ECC. Par conséquent, toute technique de localisation de terminal peut être envisagée. Ainsi, lorsque le terminal T est un téléphone mobile (ou cellulaire), connecté à un réseau cellulaire, par exemple de type UMTS, sa localisation approximative peut être effectuée à partir de la détermination de la cellule dans laquelle il est situé, ainsi qu'éventuellement par recoupement avec des localisations précédentes et/ou avec les positions géographiques de cellules voisines. Une telle localisation s'effectue généralement à l'aide de ce que l'homme de l'art appelle le HLR (pour « Home Location Register »), lequel contient des données d'information sur les terminaux mobiles T, tant statiques que dynamiques (dernière localisation connue ou position de la dernière cellule d'appartenance).

Le réseau public de téléphonie RPT est par exemple un réseau numérique de type RNIS (ou Numéris ou ISDN), raccordé au centre de commutation CC1 du réseau privé RP par un centre (ou une passerelle) de commutation CC2.

On considère dans ce qui suit, à titre d'exemple, que le centre de commutation CC2 regroupe les fonctions de centre de commutation d'appels téléphoniques CCAT et de centre de commutation de messages CCM (qu'il s'agisse de messages de type SMS ou de type courrier électronique). Mais, bien entendu, ces fonctions pourraient être assurées par des centres différents.

Dans l'exemple illustré, un unique centre d'appels ECC est raccordé au réseau public de téléphonie RPT. Mais, plusieurs centres d'appels pourraient être raccordés au réseau public de téléphonie RPT, ou bien à d'autres réseaux de téléphonie, ou de données, de l'installation.

On considère dans ce qui suit, à titre d'exemple, que le centre d'appels ECC est un centre d'appels d'urgence pouvant être joint par le numéro d'urgence 112. Mais, il pourrait s'agir du n°911 utilisé aux Etats Unis d'Amérique pour joindre un centre d'appels d'urgence appelé PSAP (pour « Public Safety Answering Point »).

L'invention consiste, chaque fois qu'un terminal T, raccordé, ici, au réseau privé RP, demande l'établissement d'un appel téléphonique avec le centre d'appels d'urgence ECC, en composant le n°112, à transmettre au centre d'appels d'urgence ECC un message de signalisation, destiné à établir ladite liaison et comprenant un identifiant d'appel choisi, et un message de type textuel comportant des données représentatives de la localisation du terminal appelant T et l'identifiant d'appel choisi, et à associer au message de signalisation reçu par le centre d'appels d'urgence ECC les données de localisation qui sont contenues dans le message textuel, également reçu par le centre d'appels d'urgence ECC, lorsque ces messages comportent le même identifiant d'appel.

Le message de signalisation est de préférence transmis dans le canal de signalisation dit « d'usager à usager » (ou canal SUU) qui est mis à la disposition des terminaux appelant et appelé, par l'opérateur, afin qu'ils puissent s'échanger de la signalisation de type bout-en-bout pendant toute la durée de leur communication.

Comme le sait l'homme de l'art, ce canal SUU permet en effet de transmettre (gratuitement) des messages de signalisation d'au moins 128 octets. Il est donc possible de transmettre au centre d'appels d'urgence ECC un identifiant d'appel (ou « call reference »), associé pour l'occasion au terminal appelant T et occupant un petit nombre d'octets (par exemple un ou deux), à l'intérieur d'un message de signalisation. Ce message de signalisation contient préférentiellement des informations précédant l'identifiant d'appel et signalant une synchronisation de cet identifiant d'appel dans le cadre d'un appel d'urgence.

Afin de permettre la détection d'une demande d'appel (d'urgence), puis la détermination d'un identifiant d'appel, et la génération d'un message textuel, l'invention propose d'équiper le serveur d'appels SA d'un dispositif d'aide à la localisation D.

Ce dispositif D est préférentiellement implanté dans le serveur d'appels SA car celui-ci est raccordé aux terminaux T, et par conséquent reçoit leurs demandes d'établissement de liaison, et au centre de commutation CC1, qui est chargé de transmettre les messages de signalisation et les messages textuel au réseau public de téléphonie RPT.

Ce dispositif D comprend un module de traitement MT chargé, tout d'abord, d'observer les numéros composés par les terminaux T lors de leurs demandes d'établissement de liaison, afin de retenir les demandes effectuées à l'aide du n°112. Bien entendu, le module de traitement MT pourrait être agencé pour retenir les demandes effectuées à l'aide de plusieurs numéros d'urgence choisis.

Une fois que le module de traitement MT a retenu une demande, il génère immédiatement un identifiant d'appel univoque. Celui-ci est de préférence choisi parmi un ensemble de nombres prédéfini. Cet ensemble est éventuellement propre au réseau privé RP auquel est connecté le terminal appelant T. Par exemple, il peut s'agir de l'ensemble appelé E.164 ou de l'ensemble ELIN.

Le module de traitement MT ordonne ensuite au centre de commutation CC1 l'intégration de l'identifiant d'appel dans un message de signalisation de demande d'établissement d'appel, afin que celui-ci soit transmis par le centre de commutation CC1 au réseau public de téléphonie RPT, et à destination du centre d'appels d'urgence ECC, dans le canal de signalisation SUU.

Sensiblement en même temps que le module de traitement MT détermine l'identifiant d'appel, il interroge le serveur de localisation SL afin qu'il lui fournisse la position géographique (ou localisation) correspondant à l'identifiant (téléphonique) du terminal appelant T, contenu dans sa demande d'établissement de liaison.

Lorsque le module de traitement MT dispose des données représentatives de la localisation du terminal appelant T, il génère un message textuel comportant ces données de localisation, puis il ordonne sa transmission par le centre de commutation CC1 au réseau public de téléphonie RPT, et à destination du centre d'appels d'urgence ECC désigné, ici, par le n° 112.

Il est important de noter que le numéro d'appel (d'urgence) utilisé par le terminal appelant T, peut désigner plusieurs centres d'appels (d'urgence) associés à des interventions identiques ou différentes, afin d'être adaptées aux sites, locaux, ou zones dans lesquelles sont situés les différents terminaux T du réseau privé RP. Dans ce cas, le module de traitement MT est agencé de manière à déterminer, dans une table de correspondance localisation/centre d'appels, le centre d'appels d'urgence qui correspond à la localisation du terminal appelant T, afin de lui transmettre le message de signalisation et le message textuel.

Le message textuel généré par le dispositif D est préférentiellement transmis par le centre de commutation CC1 sous la forme d'un courrier électronique (ou e-mail), ou plus préférentiellement encore sous la forme d'un message court de type SMS (pour Short Message Service).

Le message textuel comprend au moins un champ dédié à l'identifiant d'appel et un champ dédié aux données de localisation. De préférence, on prévoit trois champs de données de localisation, un premier champ étant dédié à la mesure de latitude, un deuxième champ étant dédié à la mesure de longitude et un troisième champ étant dédié à la mesure d'altitude.

Mais, il est préférable que le message textuel comprenne également, notamment lorsqu'il est de type SMS, au moins un champ dédié à des données représentatives de la nature de l'identifiant d'appel. On entend ici par « nature de l'identifiant d'appel » une information signalant si l'identifiant d'appel désigne un numéro dit « de sélection directe à l'arrivée » (ou SDA, ou encore DDI pour « Direct Dialling In »), ou un pseudo numéro de sélection directe à l'arrivée (ou pseudo-DDI), ou un numéro générique, ou un numéro générique et un pseudo-DDI, voire même un numéro générique accompagné d'un identifiant (ou numéro) de zone.

Plus précisément, un terminal appelant T peut par exemple avoir le numéro DDI 99999 au sein d'une entreprise accessible de l'extérieur par le numéro 88 88 89 99 99. Dans ce cas, on transmet un champ nature de valeur « DDI », suivi d'un champ de numéro présentant la valeur 88 88 89 99 99.

Si le terminal appelant T dispose d'un numéro abrégé 99999 qui n'est pas de type DDI, que le numéro d'appel de la société à laquelle il appartient est le 88 88 89 99 00, et que cette société dispose de 20 lignes d'accès, on peut donc utiliser un pseudo-DDI choisi parmi les numéros allant de 88 88 89 99 01 à 88 88 89 99 20 pour désigner ce terminal appelant T. Dans ce cas, on transmet un champ nature de valeur « pseudo-DDI », suivi d'un champ de numéro présentant par exemple la valeur 88 88 89 99 08.

Si le terminal appelant T dispose d'un numéro abrégé 99999 qui n'est pas de type DDI, que son utilisateur ne veut pas le communiquer (sachant que les données de localisation viennent d'ailleurs), et que le numéro d'appel de la société à laquelle il appartient est le 88 88 89 99 00, on peut donc utiliser un numéro générique (celui de sa société) pour désigner le terminal appelant T. Dans ce cas, on transmet un champ nature de valeur « générique », suivi d'un champ de numéro présentant la valeur 88 88 89 99 00.

Si le terminal appelant T dispose d'un numéro abrégé 99999 qui n'est pas de type DDI, et que son utilisateur accepte de le communiquer ainsi que celui de la société à laquelle il appartient (lequel est par exemple le 88 88 89 99 00), on peut donc utiliser deux numéros pour désigner ce terminal appelant T, ce qui correspond à une nature de type « both » (par exemple). Dans ce cas, on utilise un champ nature de valeur « both », suivi d'un premier champ de numéro présentant la valeur 88 88 89 99 00 et d'un second champ présentant la valeur 99999.

Si l'espace est localement divisé en zones connues du centre d'appels ECC, par exemple de 10 mètres sur 10 mètres, que le terminal appelant T est situé dans la zone n°14, et que le numéro d'appel de la société à laquelle il appartient est le 88 88 89 99 00, on peut donc utiliser un numéro dit de zone pour désigner ce terminal appelant T (celui de sa société). Dans ce cas, on transmet un champ nature de valeur « zone », suivi d'un premier champ de numéro présentant la valeur 88 88 89 99 00, et d'un second champ présentant la valeur 14.

Le message textuel peut également comprendre un ou plusieurs autres champs dédiés aux résolutions respectives des mesures de latitude, de longitude et d'altitude.

Il peut également comprendre un champ dédié à des données représentatives du type de la mesure d'altitude. En effet, la mesure d'altitude, qui est fournie par le serveur de localisation SL, n'est pas forcément une mesure absolue par rapport au niveau de la mer ou par rapport au sol sur lequel repose un bâtiment. Il peut en effet s'avérer plus précis, par exemple dans les immeubles comportant de nombreux étages, de fournir le numéro de l'étage où a été effectuée la demande d'établissement de liaison. Par ailleurs, selon les pays la mesure peut être donnée en mètre ou en pieds, ou en toute autre unité locale. Par conséquent, ce champ « type d'altitude » est destiné à préciser l'unité de mesure (mètres, pieds, niveau (ou étage), etc).

Un exemple de message textuel, de type SMS, est représenté sur la **figure 2**. Dans cet exemple, donné seulement à titre illustratif, le message textuel comporte un premier champ dédié à la nature de l'identifiant d'appel, suivi d'un deuxième champ dédié à l'identifiant d'appel, suivi d'un troisième champ dédié à la résolution de la mesure de latitude, suivi d'un quatrième champ dédié à la mesure de latitude, suivi d'un cinquième champ dédié à la résolution de la mesure de longitude, suivi d'un sixième champ dédié à la mesure de longitude, suivi d'un septième champ dédié à la résolution de la mesure d'altitude, suivi d'un huitième champ dédié au type de mesure d'altitude, suivi enfin d'un neuvième champ dédié à la mesure d'altitude.

Par exemple, les champs dédiés aux résolutions des mesures de localisation peuvent être définis par six bits indiquant le nombre de bits valides dans la mesure de localisation concernée, laquelle est généralement définie par un nombre de bits compris entre neuf, dans le cas d'un entier, et vingt-cinq, dans le cas de certaines fractions. Par ailleurs, la mesure de latitude est par exemple définie entre +90°, au nord de l'équateur, et -90°, au sud de l'équateur. En outre, la mesure de longitude est par exemple définie entre +180°, à l'est du premier méridien, et -180°, à l'ouest du premier méridien. Enfin, la précision de la longitude n'est pas seulement liée au nombre de bits de fraction, mais également à la latitude, étant donné que les méridiens convergent au niveau des pôles.

Le centre d'appels d'urgence ECC comprend un module d'association MA chargé d'observer les messages de signalisation et les messages textuel qu'il reçoit afin de tenter de les associer.

Plus précisément, lorsque le centre d'appels d'urgence ECC reçoit un message de signalisation dans le canal de signalisation SUU, il établit la liaison téléphonique avec le terminal appelant T. L'utilisateur du terminal appelant T et l'opérateur du centre d'appels d'urgence ECC peuvent alors converser ensemble. Puis, lorsque le centre d'appels d'urgence ECC reçoit un message textuel, ici sous la forme d'un message de type SMS, son module d'association MA compare l'identifiant d'appel qu'il contient à celui ou ceux contenu(s) dans le(s) message(s) de signalisation précédemment reçu(s) dans le canal de signalisation SUU. Si l'identifiant d'appel contenu dans le message textuel reçu est identique à l'identifiant d'appel contenu dans un message de signalisation associé à une liaison établie, alors le module d'association MA associe les données de localisation contenues dans ledit message textuel reçu à ce message de signalisation et donc à l'appel correspondant. Puis, le module d'association MA ordonne l'affichage sur l'écran du centre d'appels d'urgence ECC au moins des données de localisation. En variante, les données de localisation peuvent alimenter une application installée dans le centre d'appels d'urgence ECC et chargée de localiser le lieu de l'appel sur une carte ou un plan. Cette même application, ou bien une autre peut éventuellement être couplée à une base de données précisant, par exemple, les accès les meilleurs pour rejoindre le lieu localisé, éventuellement à partir d'accès extérieurs à l'entreprise ou à la zone dans laquelle il est situé. Une telle base de données peut également comporter, en correspondance des différents lieux répertoriés, des informations, par exemple sur la dangerosité d'éventuels matières entreposées ou fabriquées.

Ainsi, l'opérateur, en charge de l'appel au niveau du centre d'appels d'urgence ECC, dispose automatiquement sur son écran d'au moins la localisation du terminal T avec lequel il a établi une liaison. Il peut alors décider des mesures à prendre, compte tenu des informations qui lui ont été fournies par l'utilisateur du terminal appelant T. Il peut notamment décider d'envoyer une équipe d'intervention choisie sur le lieu de l'appel, défini par les données de localisation reçues.

Le dispositif d'aide à la localisation D, et notamment son module de traitement PM, et le module d'association MA peuvent être réalisés sous la forme de circuits électroniques, de modules logiciels (ou informatiques), ou d'une combinaison de circuits et de logiciels.

L'invention ne se limite pas aux modes de réalisation de dispositif d'aide à la localisation D, de serveur d'appels SA, de centre d'appels ECC et de procédé de transmission décrits ci-avant, seulement à titre d'exemple, mais elle englobe toutes les variantes que pourra envisager l'homme de l'art dans le cadre des revendications ci-après.

## Revendications

1. Procédé de transmission à un centre d'appels (ECC) de données représentatives de la localisation d'un terminal de communication (T), consistant, en cas de demande d'établissement d'un appel entre ce terminal (T) et ce centre d'appels (ECC), à :
- constituer puis transmettre au centre d'appels :
-- un message de signalisation, demandant l'établissement d'un appel entre ce terminal (T) et un centre d'appels (ECC), et comprenant un identifiant d'appel univoque,
-- et un message de localisation comprenant des données représentatives de la localisation du terminal appelant (T) et le même identifiant d'appel,
- et associer, dans le centre d'appel, un message de signalisation et un message de localisation, reçus par le centre d'appels et comprenant un même identifiant d'appel ;
**caractérisé en ce que**, pour constituer le message de signalisation comprenant un identifiant d'appel univoque, il consiste à générer un identifiant d'appel univoque dans un noeud de réseau recevant le message de signalisation émis par ce terminal, et demandant l'établissement d'un appel, puis intégrer cet identifiant univoque dans un message de signalisation adressé au centre d'appels et demandant l'établissement d'un appel ;
et pour constituer le message de localisation comprenant le même identifiant d'appel, il consiste à générer un message de localisation, et intégrer ce même identifiant d'appel à ce message de localisation.

2. Procédé selon la revendication 1, **caractérisé en ce que** ledit message de signalisation est un message textuel .

3. Procédé selon la revendication 2 , **caractérisé en ce que** , pour transmettre ce message textuel à travers un réseau numérique à intégration de services, à multiplexage temporel synchrone, il consiste à utiliser le canal dit de signalisation d'usager à usager.

4. Procédé selon la revendication 2, **caractérisé en ce que** ledit message textuel est transmis sous la forme d'un courrier électronique.

5. Procédé selon la revendication 2, **caractérisé en ce que** ledit message textuel est transm is sous la forme d'un message court de type SMS.

6. Procédé selon la revendication 2, **caractérisé en ce que** l'on procède à la détermination des données de localisation du terminal appelant (T) au moyen d'un serveur de localisation (SL) appartenant à un réseau (RP) auquel est connecté ledit terminal appelant (T), puis on génère ledit message textuel et on le transmet au moyen d'un serveur de messages textuels (CC1) appartenant audit réseau (RP).

7. Procédé selon la revendication 2, **caractérisé en ce que** ledit message textuel comporte un champ dédié à des données représentatives de la nature de l'identifiant d'appel, suivi d'un champ dédié audit identifiant d'appel, et au moins un champ dédié à des données représentatives de ladite localisation.

8. Procédé selon la revendication 7, **caractérisé en ce que** ladite nature de l'identifiant d'appel désigne au moins un numéro choisi parmi :
- un numéro dit « de sélection directe à l'arrivée » intégré dans ledit message de signalisation et représentant ledit terminal appelant (T) au sein du réseau (RP) auquel il est connecté,
- un pseudo numéro de sélection directe à l'arrivée intégré dans ledit message de signalisation et représentant ledit terminal appelant (T) au sein du réseau (RP) auquel il est connecté,
- un numéro générique intégré dans ledit message de signalisation et représentant une entité à laquelle ledit terminal appelant (T) est rattaché,
- un numéro générique et un pseudo numéro de sélection directe à l'arrivée, tous les deux intégrés dans ledit message de signalisation et représentant respectivement une entité à laquelle ledit terminal appelant (T) est rattaché et ledit terminal appelant (T) au sein du réseau (RP) auquel il est connecté,
- un numéro générique et un identifiant de zone, tous les deux intégrés dans ledit message de signalisation et représentant respectivement une entité à laquelle ledit terminal appelant (T) est rattaché et une zone géographique dans laquelle ledit terminal appelant (T) est situé.

9. Procédé selon la revendication 7, **caractérisé en ce que** ledit message textuel comporte au moins trois champs dédiés aux données de localisation, un premier champ étant dédié à une mesure de latitude, un deuxième champ étant dédié à une mesure de longitude et un troisième champ étant dédié à une mesure d'altitude.

10. Procédé selon la revendication 9, **caractérisé en ce que** ledit message textuel comporte au moins trois champs dédiés respectivement aux résolutions respectives des mesures de latitude, de longitude et d'altitude, et associés auxdits premier, deuxième et troisième champs de localisation.

11. Procédé selon la revendication 8, **caractérisé en ce que** ledit message textuel comporte un champ dédié à des données représentatives du type de la mesure d'altitude.

12. Procédé selon la revendication 1 , **caractérisé en ce que** ledit identifiant d'appel est placé dans un champ libre dudit message de signalisation demandant l'établissement d'un appel entre ce terminal (T) et un centre d'appels (ECC).

13. Procédé selon la revendication 1, **caractérisé en ce que** ledit identifiant d'appel est un nombre choisi parmi un ensemble choisi de nombres.

14. Procédé selon la revendication 13, **caractérisé en ce que** ledit ensemble est propre au réseau auquel est connecté ledit terminal appelant (T).

15. Dispositif (D) d'aide à la localisation d'un terminal de communication (T) par un centre d'appels (ECC), **caractérisé en ce qu'**il comprend des moyens (MT) pour :
- recevoir un message de signalisation émis par ce terminal et demandant l'établissement d'un appel entre ce terminal (T) et un centre d'appels (ECC), et pour déterminer alors un identifiant d'appel univoque,
- puis ordonner la transmission de cet identifiant d'appel audit centre d'appels (ECC) dans un message de signalisation demandant l'établissement d'un appel,
- et générer un message de type textuel comportant des données représentatives de la localisation dudit terminal appelant (T) et le même identifiant d'appel,
- puis ordonner la transmission, audit centre d'appels (ECC) dudit message textuel, de sorte que ledit centre d'appels (ECC) puisse associer les données de localisation qu'il contient audit message de signalisation demandant l'établissement d'un appel.

## Claims

1. Method of sending a call centre (ECC) data representative of the location of a communication terminal (T), consisting, in the event of a request to set up a call between that terminal (T) and that call centre (ECC), in:
- constituting and then sending to the call centre:
-- a signalling message requesting the setting up of a call between this terminal (T) and a call centre (ECC) and comprising an unambiguous call identifier, and
-- a location message comprising data representative of the location of the calling terminal (T) and the same call identifier, and
- in the call centre, associating a signalling message and a location message received by the call centre and comprising the same call identifier,
**characterised in that**, to constitute the signalling message comprising an unambiguous call identifier, it consists in generating an unambiguous call identifier in a network node receiving the signalling message sent by this terminal and requesting the setting up of a call and then in integrating said unambiguous call identifier into a signalling message sent to the call centre and requesting the setting up of a call,
and, to constitute the location message comprising the same call identifier, it consists in generating a location message and integrating the same call identifier into that location message.

2. Method according to claim 1, **characterised in that** said signalling message is a text message.

3. Method according to claim 2, **characterised in that** it consists in using the user-to-user signalling channel to send the text message over an integrated services digital network using synchronous time division multiplexing.

4. Method according to claim 2, **characterised in that** said text message is sent in the form of electronic mail.

5. Method according to claim 2, **characterised in that** said text message is sent in the form of an SMS type short message.

6. Method according to claim 2, **characterised in that** location data of the calling terminal (T) is determined by a location server (SL) belonging to a network (RP) to which said calling terminal (T) is connected, after which said text message is generated and sent by a text message server (CC1) belonging to said network (RP).

7. Method according to claim 2, **characterised in that** said text message includes a field dedicated to data representative of the nature of the call identifier followed by a field dedicated to said call identifier and at least one field dedicated to data representative of said location.

8. Method according to claim 7, **characterised in that** said nature of the call identifier designates at least one number selected from:
- a "direct dialing inwards" number integrated into said signalling message and representing said calling terminal (T) in the network (RP) to which it is connected,
- a pseudo-direct dialing inwards number integrated into said signalling message and representing said calling terminal (T) in the network (RP) to which it is connected,
- a generic number integrated into said signalling message and representing an entity to which said calling terminal (T) is attached,
- a generic number and a pseudo-direct dialing inward number, both integrated into said signalling message and respectively representing an entity to which said calling terminal (T) is attached and said calling terminal (T) in the network (RP) to which it is connected,
- a generic number and an area identifier, both integrated into said signalling message and respectively representing an entity to which said calling terminal (T) is attached and a geographical area in which said calling terminal (T) is situated.

9. Method according to claim 7, **characterised in that** said text message includes at least three fields dedicated to location data, a first field being dedicated to a latitude measurement, a second field being dedicated to a longitude measurement and a third field being dedicated to an altitude measurement.

10. Method according to claim 9, **characterised in that** said text message includes at least three fields respectively dedicated to the respective resolutions of the latitude, longitude and altitude measurements and associated with said first, second and third location fields.

11. Method according to claim 8, **characterised in that** said text message includes a field dedicated to data representative of the altitude measurement type.

12. Method according to claim 1, **characterised in that** said call identifier is placed in a free field of said signalling message requesting the setting up of a call between the terminal (T) and a call centre (ECC).

13. Method according to claim 1, **characterised in that** said call identifier is a number selected from a selected set of numbers.

14. Method according to claim 13, **characterised in that** said set is specific to the network to which said calling terminal (T) is connected.

15. Device (D) for aiding the location of a communication terminal (T) by a call centre (ECC), **characterised in that** it comprises means (MT) for:
- receiving a signalling message sent by the terminal and requesting the setting up of a call between the terminal (T) and a call centre (ECC) and then determining an unambiguous call identifier,
- then instructing the sending of that call identifier to said call centre (ECC) in a signalling message requesting the setting up of a call, and
- generating a text type message including data representative of the location of said calling terminal (T) and the same calling identifier, and then
- instructing the sending of said text message to said call centre (ECC) so that said call centre (ECC) can associate the location data that it contains with said signalling message requesting the setting up of a call.

## Patentansprüche

1. Verfahren zum Senden von Lokalisierungsdaten eines Kommunikationsendgeräts (T) an eine Anrufzentrale (ECC), das darin besteht, im Falle der Anforderung zum Aufbauen eines Anrufs zwischen diesem Endgerät (T) und dieser Anrufzentrale (ECC):
- folgendes zu bilden und dann an die Anrufzentrale zu senden:
o eine Signalisierungsmeldung, die den Aufbau eines Anrufs zwischen diesem Endgerät (T) und einer Anrufzentrale (ECC) anfordert, und eine eindeutige Anrufkennung einschließt,
o und eine Lokalisierungsmeldung, die Daten einschließt, die für die Lokalisierung des anrufenden Endgerät (T) stehen und die gleiche Anrufkennung,
- und in der Anrufzentrale eine Signalisierungsmeldung und eine Lokalisierungsmeldung, die von der Anrufzentrale empfangen wurden und ein und die selbe Anrufkennung enthalten, in Verbindung zu bringen;
**dadurch gekennzeichnet, dass** es zur Bildung der Signalisierungsmeldung mit einer eindeutigen Anrufkennung darin besteht, eine eindeutige Anrufkennung in einem Netzknoten zu generieren, der die von diesem Endgerät gesendete Signalisierungsmeldung empfängt, welche den Aufbau eines Anrufs anfordert, dann diese eindeutige Kennung in eine Signalisierungsmeldung zu integrieren, die an die Anrufzentrale gerichtet ist und den Aufbau eines Anrufs anfordert;
und darin besteht, dass es zur Bildung der Lokalisierungsmeldung mit der gleichen Anrufkennung eine Lokalisierungsmeldung generiert und eben diese Anrufkennung in diese Lokalisierungsmeldung integriert.

2. Verfahren gemäß Anspruch 1, **dadurch gekennzeichnet, dass** diese Signalisierungsmeldung eine Textmitteilung ist.

3. Verfahren gemäß Anspruch 2, **dadurch gekennzeichnet, dass** es zum Senden dieser Textmitteilung durch ein diensteintegrierendes digitales Netz mit synchronem Zeitmultiplex darin besteht, den so genannten Teilnehmer-zu-Teilnehmer-Signalisierungskanal zu verwenden.

4. Verfahren gemäß Anspruch 2, **dadurch gekennzeichnet, dass** diese Textmitteilung in Form einer E-Mail übermittelt wird.

5. Verfahren gemäß Anspruch 2, **dadurch gekennzeichnet, dass** diese Textmitteilung in Form einer Kurzmitteilung vom Typ SMS übermittelt wird.

6. Verfahren gemäß Anspruch 2, **dadurch gekennzeichnet, dass** man die Lokalisierungsdaten des anrufenden Endgeräts (T) mittels eines Lokalisierungsservers (SL), der zum Netz (RP) gehört, an welches dieses anrufende Endgerät (T) angeschlossen ist, ermittelt, dann diese Textmitteilung generiert und mittels eines zu diesem Netz (RP) gehörenden Textmitteilungsservers (CC1) sendet.

7. Verfahren gemäß Anspruch 2, **dadurch gekennzeichnet, dass** diese Textmitteilung ein Feld einschließt, das für Daten dediziert ist, welche für die Beschaffenheit der Anrufkennung stehen, gefolgt von einem Feld, das für diese Anrufkennung dediziert ist, und mindestens ein Feld, das für Daten dediziert ist, die für diese Lokalisierung stehen.

8. Verfahren gemäß Anspruch 7, **dadurch gekennzeichnet, dass** diese Beschaffenheit der Anrufkennung mindestens eine Nummer bezeichnet, die ausgewählt wurde aus:
- einer so genannten "Direktauswahlnummer bei Ankommen", die in diese Signalisierungsmeldung integriert ist und dieses anrufende Endgerät (T) im Netz (RP), an das es angeschlossen ist, darstellt,
- einer Pseudo-Direktauswahlnummer bei Ankommen, die in diese Signalisierungsmeldung integriert ist und dieses anrufende Endgerät (T) im Netz (RP), an das es angeschlossen ist, darstellt,
- einer generischen Nummer, die in diese Signalisierungsmeldung integriert ist und eine Instanz darstellt, an die dieses anrufende Endgerät (T) angeschlossen ist,
- einer generischen Nummer und einer Pseudo-Direktauswahlnummer bei Ankommen, beide in diese Signalisierungsmeldung integriert und eine Instanz darstellend, an die dieses anrufende Endgerät (T) angeschlossen ist, beziehungsweise dieses anrufende Endgerät (T) in dem Netz (RP), an das es angeschlossen ist,
- einer generischen Nummer und einer Bereichskennung, beide in diese Signalisierungsmeldung integriert und eine Instanz darstellend, an die dieses anrufende Endgerät (T) angeschlossen ist, beziehungsweise einen geographischen Bereich, in dem dieses anrufende Endgerät (T) gelegen ist.

9. Verfahren gemäß Anspruch 7, **dadurch gekennzeichnet, dass** diese Textmitteilung mindestens drei Felder enthält, die für die Lokalisierungsdaten dediziert sind, wobei ein erstes Feld für ein Breitenmaß dediziert ist, ein zweites Feld für ein Längenmaß dediziert ist und ein drittes Feld für ein Höhenmaß dediziert ist.

10. Verfahren gemäß Anspruch 9, **dadurch gekennzeichnet, dass** diese Textmitteilung mindestens drei Felder enthält, die jeweils für die jeweiligen Auflösungen der Breiten-, Längen- und Höhenmaße dediziert sind, und mit diesem ersten, zweiten und dritten Lokalisierungsfeld verknüpft sind.

11. Verfahren gemäß Anspruch 8, **dadurch gekennzeichnet, dass** diese Textmitteilung ein Feld enthält, das für Daten dediziert ist, die für den Typ des Höhenmaßes stehen.

12. Verfahren gemäß Anspruch 1, **dadurch gekennzeichnet, dass** diese Anrufkennung in einem freien Feld dieser Signalisierungsmeldung angeordnet ist, die den Aufbau eines Anrufs zwischen diesem Endgerät (T) und einer Anrufzentrale (ECC) anfordert.

13. Verfahren gemäß Anspruch 1, **dadurch gekennzeichnet, dass** diese Anrufkennung eine Zahl gewählt aus einer gewählten Menge von Zahlen ist.

14. Verfahren gemäß Anspruch 13, **dadurch gekennzeichnet, dass** diese Menge dem Netz eigen ist, an das dieses anrufende Endgerät (T) angeschlossen ist.

15. Hilfsvorrichtung (D) zur Lokalisierung eines Kommunikationsendgeräts (T) durch eine Anrufzentrale (ECC), **dadurch gekennzeichnet, dass** sie Mittel (MT) einschließt:
- zum Empfangen einer Signalisierungsmeldung, die von diesem Endgerät gesendet wird und den Aufbau eines Anrufs zwischen diesem Endgerät (T) und einer Anrufzentrale (ECC) anfordert, und zum anschließenden Ermitteln einer eindeutigen Anrufkennung,
- zum anschließenden Anordnen der Übermittlung dieser Anrufkennung an diese Anrufzentrale (ECC) in einer Signalisierungsmeldung, die den Aufbau eines Anrufs anfordert,
- und zum Generieren einer Textmitteilung, die Daten enthält, die für die Lokalisierung dieses anrufenden Endgeräts (T) stehen, und die gleiche Anrufkennung,
- zur anschließenden Anordnung des Sendens dieser Textmitteilung an diese Anrufzentrale (ECC), damit diese Anrufzentrale (ECC) die Lokalisierungsdaten, welche in ihr enthalten sind, mit dieser Signalisierungsmeldung, die den Aufbau eines Anrufs anfordert, in Verbindung bringen kann.
